# EUROPÄISCHE PATENTSCHRIFT

(11) **EP 0 929 984 B1**
(45) Veröffentlichungstag und Bekanntmachung des Hinweises auf die Patenterteilung: **11.02.2004**
(21) Anmeldenummer: 97909186.5
(22) Anmeldetag: 24.09.1997
(51) Int. Cl.: H04Q 7/34, H04M 3/42

(54) **VERFAHREN ZUM WIEDERHERSTELLEN VON TEILNEHMERBEZOGENEN INFORMATIONEN IN EINEM DATENBANKSYSTEM EINES KOMMUNIKATIONSNETZES**
METHOD TO RESTORE SUBSCRIBER RELATED INFORMATION IN A COMMUNICATION NETWORK DATA BASE SYSTEM
PROCEDE PERMETTANT DE RECONSTITUER DES INFORMATIONS RELATIVES A DES ABONNES DANS UN SYSTEME DE BANQUE DE DONNEES DE RESEAU DE COMMUNICATION

(30) Priorität: 30.09.1996 DE 19640288
(43) Veröffentlichungstag der Anmeldung: 21.07.1999
(73) Patentinhaber: SIEMENS AKTIENGESELLSCHAFT, 80333 München (DE)
(72) Erfinder: KARAPETKOV, Stefan, D-81369 München (DE); SCOTTO DI CARLO, Vincenzo, D-81739 München (DE); MÜLLER, Wilhelm, D-85457 Wörth (DE)
(86) Internationale Anmeldenummer: PCT/DE1997/002167
(87) Internationale Veröffentlichungsnummer: WO 1998/015131

(56) Entgegenhaltungen:
- WO-A-96/29838
- DE-A- 4 343 335
- US-A- 5 463 674
- YI-BING LIN: "FAILURE RESTORATION OF MOBILITY DATABASES FOR PERSONAL COMMUNICATION NETWORKS" WIRELESS NETWORKS, Bd. 1, Nr. 3, 1.Oktober 1995, Seiten 365-372, XP000538247

## Beschreibung

Die Erfindung betrifft ein Verfahren zum Wiederherstellen von teilnehmerbezogenen Informationen in einem ersten Datenbanksystem eines ersten Kommunikationsnetzes, wenn die entsprechenden Teilnehmer sowohl in dem ersten Kommunikationsnetz als auch in einem zweiten Kommunikationsnetz als Teilnehmer angemeldet sind, wobei in dem zweiten Kommunikationsnetz ein zweites Datenbanksystem zum Speichern von Teilnehmerdatensätzen mit teilnehmerbezogenen Informationen vorgesehen ist und vom aktuellen Aufenthaltsort des Teilnehmers bzw. Endgerätes abhängige Informationen wiederherzustellen sein könnten. Solche teilnehmer- bzw. endgerätebezogenen Informationen können beispielsweise Informationen über die aktuelle Erreichbarkeit eines Teilnehmers bzw. Endgeräts sein oder aktuelle endgerätespezifische Leistungsmerkmaleinstellungen.

Aus dem Buch von M. Mouly, M.B. Pautet, "The GSM System for Mobile Communications", 1992, F-91120 Paliseau ist insbesondere auf den Seiten 470 bis 473 das Aktualisieren der Datenbasis des Aufenthaltsortes von Endgeräten in einem Mobilfunknetz sowie das Wiederherstellen von teilnehmerbezogenen bzw. endgerätebezogenen Informationen innerhalb einer Datenbasis nach einem Störfall beschrieben. Hierbei werden nur Informationen über die Erreichbarkeit eines Teilnehmers bzw. Endgerätes innerhalb des Mobilfunknetzes gespeichert bzw. wiederhergestellt. Bei dem hier beschriebenen Verfahren zum Wiederherstellen von Informationen über den Aufenthaltsort eines Endgerätes innerhalb des Mobilfunknetzes werden in einem ersten Schritt die unsicheren, also potentiell falschen Informationen als solche markiert. Dann werden andere Einheiten des Mobilfunknetzes von dem unsicheren Zustand dieser Informationen unterrichtet, woraufhin auch diese Einheiten die entsprechenden Informationen als unsicher markieren. Um die Signalisierungsbelastung des Kommunikationsnetzes möglichst wenig zu belasten, werden die unsicheren Daten nur dann wiederhergestellt bzw. korrigiert, wenn ein den Teilnehmer bzw. das Endgerät betreffendes Ereignis auftritt, wie z.B. ein von dem Endgerät initialisierter Funkkontakt. Um einen solchen Funkkontakt innerhalb einer bestimmten Zeitspanne sicherzustellen, wird die Information über den Aufenthaltsort des Teilnehmers bzw. des Endgerätes periodisch, beispielsweise einmal täglich, aktualisiert. Das bekannte Verfahren, das nur innerhalb eines Mobilfunknetzes angewandt wird, setzt voraus, daß eine Einheit, die beispielsweise eine Information über den aktuellen Aufenthaltsort eines Endgerätes bereitstellen kann, eine Mitteilung darüber erhält, daß die entsprechenden Daten aufgrund eines Fehlerfalles evtl. nicht korrekt sind. Wenn eine solche Mitteilung vorliegt, werden diese Daten aktualisiert, d.h. korrigiert, falls eine bestimmte Aktion bezüglich des Endgerätes auftritt. Um eine solche Aktion innerhalb einer bestimmten Zeitdauer sicherzustellen, ist es bekannt, einen periodischen Funkkontakt zu veranlassen.

In WO 96/29838 ist ein Verfahren zum Aktualisieren von Teilnehmerdaten in einem Mobilkommunikationssystem beschrieben, bei dem eine Besucher-Datenbasis eine Information darüber empfängt, daß Teilnehmerdaten wiederhergestellt werden sollen, ohne daß die Besucher-Datenbasis hierzu eine reguläre Aktualisierungsanforderung erhalten hat. Die Besucher-Datenbasis wird daraufhin nach Teilnehmerdaten und zugehörigen Zeitstempeln durchsucht. Für ermittelte Teilnehmer werden dann virtuelle Registrierungsanfragen an jeweilige Heimatstandort-Datenbasen übermittelt. Auf die Registrierungsanfragen vergleichen die Heimatstandort-Datenbasen die dort gespeicherten Teilnehmerdaten und zugehörige Zeitstempel mit den von der Registrierungsanfrage umfaßten Teilnehmerdaten und Zeitstempeln. Auf Grundlage dieses Vergleichs entscheiden die Heimatstandort-Datenbasen, ob die Besucher-Datenbasen oder die Heimatstandort-Datenbasen zu aktualisieren sind.

Aus DE 43 43 335 A1 ist ein Verfahren zum Erreichen von Teilnehmern im Festnetz und in Mobilnetzen unter Verwendung eines Mobiltelefons bekannt. Bei Erstinstallation des Mobiltelefons werden eine Ortsnetzkennziffer eines Teilnehmers im Festnetz und eine Durchwahlkennziffer einer Vermittlungsanlage im Mobiltelefon gespeichert. Je nachdem, wo bzw. an welchem Netzanschlußpunkt sich das Mobiltelefon gerade bedindet, werden durch Manipulation der Ortsnetzkennziffer und der Durchwahlkennziffer zur Herstellung notwendiger Anschlußcodes notwendige Anrufumleitungen durchgeführt.

In US 5,463,674 ist ein Mobiltelefon beschrieben, das sowohl an einer Schnurlos-Basisstation als auch an einer Mobilfunk-Basisstation betrieben werden kann. Sobald sich das Mobiltelefon in der Reichweite der Schnurlos-Basisstation befindet, werden Telefongespräche von und zum Mobiltelefon über die Schnurlos-Basisstation vermittelt. Befindet sich das Mobiltelefon wieder außerhalb der Reichweite der Schnurlos-Basisstation, werden Telefongespräche von und zum Mobiltelefon über eine Mobilfunk-Basisstation vermittelt.

Aus Yi-Bing Lin: "Failure Restoration of Mobility Databases for Personal communication Networks", Wireless Networks, Bd. 1, Nr. 3, 1. Oktober 1995, S. 65-372, XP000538247 ist ein Verfahren zur Herstellung von Datenbasen in Mobilfunknetzen bekannt, bei dem ein optimales Besucher-Datenbasis-Prüfintervall unter Abwägung von Prüf- gegenüber Rufkosten ermittelt wird.

Aufgabe der vorliegenden Erfindung ist es, ein Verfahren zum Wiederherstellen von teilnehmerbezogenen bzw. endgerätebezogenen Informationen nach einem Fehler in einem Datenbanksystem eines ersten Kommunikationsnetzes zum Speichern solcher Informationen für den Fall bereitzustellen, daß ein Teilnehmer bzw. Endgerät sowohl über das erste Kommunikationsnetz als auch über ein weiteres Kommunikationsnetz erreichbar ist, wobei vom aktuellen Aufenthaltsort des Teilnehmers bzw. Endgerätes abhängige Informationen wiederherzustellen sein könnten.

Diese Aufgabe löst die Erfindung durch ein Verfahren mit den Merkmalen des Anspruches 1. Günstige Ausgestaltungsformen eines solchen Verfahrens sind Gegenstand von Unteransprüchen.

Zum Wiederherstellen von teilnehmerbezogenen Informationen in einem ersten Datenbanksystem eines ersten Kommunikationsnetzes für den Fall, daß die entsprechenden Teilnehmer sowohl in dem ersten Kommunikationsnetz als auch in einem zweiten Kommunikationsnetz als Teilnehmer angemeldet sind, wobei in dem zweiten Kommunikationsnetz ein zweites Datenbanksystem zum Speichern von Teilnehmerdatensätzen mit teilnehmerbezogenen Informationen vorgesehen ist, ist im zweiten Kommunikationsnetz eine Steuereinrichtung zum Speichern der für das erste Datenbanksystem relevanten teilnehmerbezogenen Informationen aus den Teilnehmerdatensätzen der Datenbanken mehrerer Schnurloskommunikationsanlagen in einer Speichereinrichtung vorgesehen und zum Übermitteln von von dem ersten Datenbanksystems angeforderten teilnehmerbezogenen Informationen an das erste Kommunikationsnetz. Eine Steuerung des ersten Datenbanksystems ermittelt potentiell fehlerhafte teilnehmerbezogenen Informationen im ersten Datenbanksystem und übermittelt eine Anforderungsmeldung zum Anfordern der entsprechenden korrekten Informationen an die Steuereinrichtung des zweiten Kommunikationsnetzes.

Eine Ausgestaltung eines erfindungsgemäßen Verfahrens sieht vor, daß die einzelnen Schnurloskommunikationsanlagen jeweils eine Aktualisierungsmeldung an die Steuereinrichtung übermitteln, wenn sich die Erreichbarkeit eines einem Teilnehmer zugeordneten Endgerätes über diese Schnurloskommunikationsanlage ändert.

Das erste Kommunikationsnetz kann ein öffentliches Kommunikationsnetz mit mehreren Schnurloskommunikationsanlagen sein und das zweite Kommunikationsnetz ein privates Kommunikationsnetz mit mehreren Schnurloskommunikationsanlagen. Die drahtlos verbindbaren Endgeräte sind in diesem Falle Schnurlosendgeräte.

Das erste Kommunikationsnetz kann beispielsweise ein Mobilfunknetz sein. In diesem Falle können die drahtlos verbindbaren Endgeräte auch Dualmodus-Endgeräte mit Schnurloskommunikationsteil und mit Mobilfunkkommunikationsteil sein.

In einer bevorzugten Ausführungsform eines erfindungsgemäßen Verfahrens speichert die Steuereinrichtung die für das erste Datenbanksystem relevanten teilnehmerbezogenen Informationen in Matrix-Form.

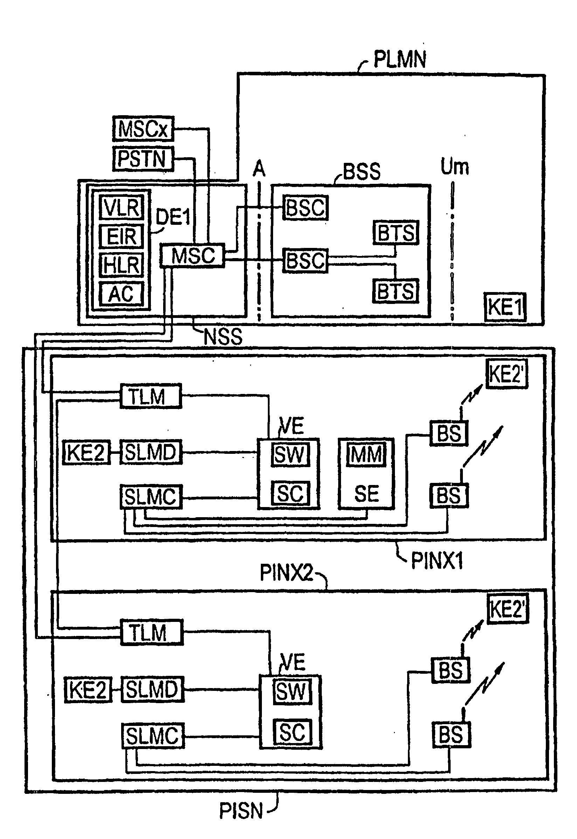

Nachstehend wird die Erfindung unter Bezugnahme auf die Figur anhand eines Ausführungsbeispieles näher erläutert.

Die Figur zeigt in schematischer Darstellung ein Blockschaltbild einer Netzanordnung, bestehend aus einem Mobilfunknetz, einem öffentlichen stationären Netz und einem Privatnetz, bestehend aus zwei Schnurloskommunikationseinrichtungen.

Die Figur zeigt in schematischer Darstellung ein Blockschaltbild eines Mobilfunknetzes PLMN mit einem Netzsubsystem NSS (Network Subsystem) zum Verbindungsaufbau zwischen mindestens einem Mobilteilnehmer mit anderen Teilnehmern und zum Mobilitätsmanagement, und mit einem Basisstationensubssystems zum Steuern der Funkverbindungen mit Mobilstationen. In der Figur ist beispielhaft eine Mobilstation als Kommunikationsendgerät KE1 gezeigt.

Die Haupteinheit des Netzwerksubsystems NSS ist ein Mobildienstevermittlungszentrum MSC (Mobile Services Switching Center), das über eine A-Schnittstelle mit Basisstationssteuereinheiten BSC (Base Station Controller) kommuniziert. In dem einen in der Figur dargestellten Basisstationsstationssubsystem BSS ist eine Basisstationsteuereinheit BSC gezeigt, die mehrere Basisstationen BTS bedarfsweise mit dem Mobildienstevermittlungszentrum MSC verbindet.

Das Mobildienstevermittlungszentrum MSC dient als üblicher Vermittlungsknoten und stellt darüber hinaus alle zum Behandeln von mobilen Teilnehmern benötigten Funktionalitäten wie Registrierung, Autentifikation, Aktualisierung des Aufenthaltsortes, Gesprächsübergabe zwischen Basisstationen und Rufsteuerung zu einem in einem Bereich einer Basisstation als anwesend angemeldeten Teilnehmer bereit. Das Mobildienstevermittlungszentrum MSC stellt auch Verbindungen zu den öffentlichen Netzen PSTN und im Beispiel nach der Figur zu einem anderen Mobildienstevermittlungszentrum MSCx sowie zu zwei Schnurloskommunikationseinrichtungen PINX1, PINX2 eines privaten Netzes bereit. Ein Heimataufenthaltsortsregister HLR und ein Besucheraufenthaltsortsregister VLR dienen gemeinsam mit dem Mobildienstevermittlungszentrum MSC der Rufsteuerung und der Aufenthaltsortermittlung von Teilnehmerendgeräten im Mobilfunknetz.

Zwei weitere Register des Netzsubsystems NSS, nämlich ein Equipment-Identity-Register EIR und ein Authentifizierungsregister AC werden zur Authentifikation und zu Sicherheitszwecken benutzt. Das Equipment Identity Register EIR enthält eine Liste aller in dem Netz zugelassener Mobilgeräte, wobei jede Mobilstation durch ihre internationale Mobile-Equipment-Identitfikation IMEI (International Mobile Equipment Identity) identifiziert ist. Im Authentifizierungszenter AC sind Kopien aller geheimen, jeweils in der SIM-Karte jedes Teilnehmers gespeicherten Schlüssel abgelegt, die zur Authentifikation und zur Verschlüsselung über den Funkkanal verwendet werden.

Demnach liegt von jedem Teilnehmer innerhalb des Mobilfunknetzes PLM eine ihm zugeordnete Datenbasis vor, in der seine Berechtigungen, sein Aufenthaltsort und weitere Informationen abrufbar gespeichert sind.

Das Mobildienstevermittlungszentrum MSC kommuniziert mit den Registern HLR, VLR, AC und EIR unter Verwendung eines MAP genannten Protokolls (Mobile Application Part Protocol). Dieses genormte Protokoll MAP enthält Signalisierungsfunktionen, die zum Bereitstellen von in einem Mobilnetz benötigten Diensten erforderlich sind.

Die Figur zeigt außerdem zwei Schnurloskommunikationseinrichtungen PINX1, PINX2 eines Privatnetzes, jeweils mit einer vermittlungseinrichtung VE zum Auf- und Abbau von Verbindungen zwischen Teilnehmern. Die beiden Schnurloskommunikationseinrichtungen PINX1, PINX2 sind hierbei identisch dargestellt und werden nur einmal beschrieben. Die Vermittlungseinrichtung VE enthält einen Vermittlungsknoten SW und eine Vermittlungssteuerung SC. Die Vermittlungseinrichtung VE ist über ein Netzleitungsanschlußmodul PLM mit einem öffentlichen Kommunikationsnetz PSTN und mit dem Mobildienstevermittlungszentrum MSC des Mobilfunknetzes PLMN verbindbar. Die Vermittlungseinrichtung VE kann über Teilnehmeranschlußmodule SLMD und SLMC Verbindungen zu Kommunikationsendgeräten KE2, KE2' aufbauen. Das in der Figur beispielhaft dargestellte Teilnehmeranschlußmodul für digitale Endgerät SLMD ist über eine Leitung mit einem Kommunikationsendgerät KE2 verbindbar. Das in der Figur dargestellte Schnurlos-Teilnehmeranschlußmodul SLMC ist über eine Basisstation BS und eine Funkstrecke mit einem Kommunikationsendgerät KE2' verbindbar.

Die Figur zeigt außerdem eine Speichereinrichtung MM und eine Steuereinrichtung SE zum Speichern der für das erste Datenbanksystem DE1 relevanten teilnehmerbezogenen Informationen aus den Teilnehmerdatensätzen der Datenbanken der Schnurloskommunikationsanlagen PINX2, PINX1 in der Speichereinrichtung MM.

Zum Wiederherstellen von teilnehmerbezogenen Informationen in einem ersten Datenbanksystem DE1 des Mobilfunknetzes PLMN für den Fall, daß die entsprechenden Teilnehmer sowohl in dem Mobilfunknetz PLMN als auch in dem Schnurloskommunikationsnetz PISN als Teilnehmer angemeldet sind, ist im Schnurloskommunikationsnetz PISN eine Steuereinrichtung SE zum Speichern der für das erste Datenbanksystem relevanten teilnehmerbezogenen Informationen aus den Teilnehmerdatensätzen der Datenbanken mehrerer Schnurloskommunikationsanlagen PINX1, PINX2 in der Speichereinrichtung MM vorgesehen. Die Steuereinrichtung SE dient außerdem zum Übermitteln von von dem ersten Datenbanksystems DE1 angeforderten teilnehmerbezogenen Informationen an das Mobilfunknetz PLMN. Eine Steuerung des ersten Datenbanksystems DE1 ermittelt potentiell fehlerhafte teilnehmerbezogenen Informationen im ersten Datenbanksystem DE1 und übermittelt eine Anforderungsmeldung zum Anfordern der entsprechenden korrekten Informationen an die Steuereinrichtung SE des Schnurloskommunikationsnetz PISN.

## Patentansprüche

1. Verfahren zum Wiederherstellen von teilnehmerbezogenen Informationen in einem ersten Datenbanksystem (DE1) eines ersten Kommunikationsnetzes (PLMN), wenn die entsprechenden Teilnehmer sowohl in dem ersten Kommunikationsnetz (PLMN) als auch in einem zweiten Kommunikationsnetz (PISN) mit mehreren Schnurloskommunikationsanlagen (PINX1, PINX2) als Teilnehmer angemeldet sind, wobei einzelnen Teilnehmern drahtlos verbindbare Endgeräte (KE) zugeordnet sind und jedes dieser drahtlos verbindbaren Endgeräte (KE) in einer der Schnurloskommunikationsanlagen (PINX1, PINX2) als Teilnehmerendgerät angemeldet und betreibbar ist und in den übrigen Schnurloskommunikationsanlagen (PINX2, PINX1) als Gastendgerät betreibbar ist, und wobei ein zweites, aus einer Vielzahl von Datenbanken einzelner Schnurloskommunikationsanlagen (PINX2, PINX1) bestehendes Datenbanksystem des zweiten Kommunikationsnetzes (PISN) zum Speichern von Teilnehmerdatensätzen mit teilnehmerbezogenen Informationen vorgesehen ist, **dadurch gekennzeichnet, daß** im zweiten Kommunikationsnetz (PISN) eine Steuereinrichtung (SE) zum Speichern der für das erste Datenbanksystem relevanten teilnehmerbezogenen Informationen aus den Teilnehmerdatensätzen der Datenbanken mehrerer Schnurloskommunikationsanlagen (PINX2, PINX1) in einer Speichereinrichtung (MM) vorgesehen ist und zum Übermitteln von von dem ersten Datenbanksystems (DE1) abgefragten teilnehmerbezogenen Informationen an das erste Kommunikationsnetz (PLMN).

2. Verfahren nach Anspruch 1, **dadurch gekennzeichnet, daß** die einzelnen Schnurloskommunikationsanlagen (PINX2, PINX1) jeweils eine Aktualisierungsmeldung an die Steuereinrichtung (SE) übermitteln, wenn sich die Erreichbarkeit eines einem Teilnehmer zugeordneten Endgerätes (KE) über diese Schnurloskommunikationsanlage (PINX2, PINX1) ändert.

3. Verfahren nach einem der vorhergehenden Ansprüche, **dadurch gekennzeichnet, daß** das erste Kommunikationsnetz ein öffentliches Kommunikationsnetz mit mehreren Schnurloskommunikationsanlagen (PINX1, PINX2) ist und das zweite Kommunikationsnetz (PISN) ein privates Kommunikationsnetz mit mehreren Schnurloskommunikationsanlagen (PINX1, PINX2) ist.

4. Verfahren nach einem der vorhergehenden Ansprüche, **dadurch gekennzeichnet, daß** die drahtlos verbindbaren Endgeräte (KE) Schnurlosendgeräte sind.

5. verfahren nach einem der vorhergehenden Ansprüche, **dadurch gekennzeichnet, daß** das erste Kommunikationsnetz ein Mobilfunknetz (PLMN) ist.

6. Verfahren nach einem der vorhergehenden Ansprüche, **dadurch gekennzeichnet, daß** die drahtlos verbindbaren Endgeräte (KE) Dualmodus-Endgeräte mit Schnurloskommunikationsteil und mit Mobilfunkkommunikationsteil sind.

7. Verfahren nach einem der vorhergehenden Ansprüche, **dadurch gekennzeichnet, daß** die an die Steuerung (DS) des ersten Datenbanksystems (DE1) übermittelten teilnehmerbezogenen Informationen mindestens Informationen über die aktuelle Erreichbarkeit des jeweiligen Teilnehmers einschließen.

8. Verfahren nach einem der vorhergehenden Ansprüche, **dadurch gekennzeichnet, daß** die Steuereinrichtung (SE) die für das erste Datenbanksystem relevanten teilnehmerbezogenen Informationen in Matrix-Form speichert.

## Claims

1. Method for restoring subscriber-related information in a first database system (DE1) of a first communication network (PLMN) if the corresponding subscribers are registered as subscribers both in the first communication network (PLMN) and in a second communication network (PISN) comprising a number of cordless communication systems (PINX1, PINX2), wherein terminals (KE), which can be wirelessly connected, are allocated to individual subscribers and each of these terminals (KE), which can be wirelessly connected, is registered and can be operated as subscriber terminal in one of the cordless communication systems (PINX1, PINX2) and can be operated as visiting terminal in the remaining cordless communication systems (PINX2, PINX1), and wherein a second database system consisting of a multiplicity of databases of individual cordless communication systems (PINX2, PINX1), of the second communication network (PISN) is provided for storing subscriber data records containing subscriber-related information, **characterized in that** in the second communication network (PISN), a controller (SE) for storing the subscriber-related information relevant to the first database system from the subscriber data records of the databases of a number of cordless communication systems (PINX2, PINX1) in a storage device (MM) and for transferring subscriber-related information, retrieved from the first database system (DE1), to the first communication network (PLMN) is provided.

2. Method according to Claim 1, **characterized in that** the individual cordless communication systems (PINX2, PINX1) in each case transfer an updating message to the controller (SE) if the availability of a terminal (KE) allocated to a subscriber via this cordless communication system (PINX2, PINX1) changes.

3. Method according to one of the preceding claims, **characterized in that** the first communication network is a public communication network comprising a number of cordless communication systems (PINX1, PINX2) and the second communication network (PISN) is a private communication network comprising a number of cordless communication systems (PINX1, PINX2).

4. Method according to one of the preceding claims, **characterized in that** the terminals (KE) which can be wirelessly connected are cordless terminals.

5. Method according to one of the preceding claims, **characterized in that** the first communication network is a mobile radio network (PLMN).

6. Method according to one of the preceding claims, **characterized in that** the terminals (KE) which can be wirelessly connected are dual-mode terminals comprising a cordless communication part and a mobile radio communication part.

7. Method according to one of the preceding claims, **characterized in that** the subscriber-related information transferred to the controller (DS) of the first database system (DE1) includes at least information on the current availability of the respective subscriber.

8. Method according to one of the preceding claims, **characterized in that** the controller (SE) stores in matrix form the subscriber-related information relevant to the first database system.

## Revendications

1. Procédé permettant de reconstituer des informations relatives à des abonnés dans un premier système de bases de données (DE1) d'un premier réseau de communication (PLMN) lorsque les abonnés correspondants sont inscrits en tant qu'abonnés à la fois dans le premier réseau de communication (PLMN) et dans un second réseau de communication (PISN) comprenant plusieurs installations de communication sans fil (PINX1, PINX2), des terminaux (KE) pouvant faire l'objet d'une liaison sans fil étant associés aux abonnés individuels et chacun de ces terminaux (KE) pouvant faire l'objet d'une liaison sans fil étant inscrit et pouvant être exploité en tant que terminal d'abonné dans une des installations de communication sans fil (PINX1, PINX2) et pouvant être exploité en tant que terminal hôte dans les autres installations de communication sans fil (PINX2, PINX1), et un second système de bases de données du second réseau de communication (PISN), formé d'une pluralité de bases de données d'installations de communication sans fil individuelles (PINX2, PINX1), étant prévu pour enregistrer des ensembles de données d'abonnés contenant des informations relatives à des abonnés, **caractérisé en ce que** l'on prévoit, dans le second réseau de communication (PISN), un dispositif de commande (SE) servant à enregistrer dans un dispositif d'enregistrement (MM) les informations relatives à des abonnés importantes pour le premier système de bases de données et provenant des ensembles de données d'abonnés des bases de données de plusieurs installations de communication sans fil (PINX2, PINX1), et servant à transmettre au premier réseau de communication (PLMN) des informations relatives à des abonnés demandées par le premier système de bases de données (DE1).

2. Procédé selon la revendication 1, **caractérisé en ce que** les installations de communication sans fil individuelles (PINX2, PINX1) transmettent à chaque fois un message d'actualisation au dispositif de commande (SE) lorsque l'accessibilité d'un terminal (KE) associé à un abonné se modifie sur cette installation de communication sans fil (PINX2, PINX1).

3. Procédé selon l'une des revendications précédentes, **caractérisé en ce que** le premier réseau de communication est un réseau de communication public comprenant plusieurs installations de communication sans fil (PINX1, PINX2) et le second réseau de communication (PISN) est un réseau de communication privé comprenant plusieurs installations de communication sans fil (PINX1, PINX2).

4. Procédé selon l'une des revendications précédentes, **caractérisé en ce que** les terminaux (KE) pouvant faire l'objet d'une liaison sans fil sont des terminaux sans fil.

5. Procédé selon l'une des revendications précédentes, **caractérisé en ce que** le premier réseau de communication est un réseau de radiotéléphonie mobile (PLMN).

6. Procédé selon l'une des revendications précédentes, **caractérisé en ce que** les terminaux (KE) pouvant faire l'objet d'une liaison sans fil sont des terminaux bi-mode comprenant une partie de communication sans fil et une partie de radiocommunication mobile.

7. Procédé selon l'une des revendications précédentes, **caractérisé en ce que** les informations relatives à des abonnés transmises à la commande (DS) du premier système de bases de données (DE1) contiennent au moins des informations sur l'accessibilité actuelle de l'abonné respectif.

8. Procédé selon l'une des revendications précédentes, **caractérisé en ce que** le dispositif de commande (SE) enregistre les informations relatives à des abonnés importantes pour le premier système de bases de données sous forme de matrice.
